Europäisches Patentamt

European Patent Office

Office européen des brevets

(19)

(11) EP 0 707 915 A1

(12) **EUROPEAN PATENT APPLICATION**

(43) Date of publication:
24.04.1996 Bulletin 1996/17

(51) Int Cl.6: **B23H 1/02**

(21) Application number: 95307357.4

(22) Date of filing: 17.10.1995

(84) Designated Contracting States:
CH DE LI

(30) Priority: 19.10.1994 JP 278606/94

(71) Applicant: FANUC LTD.
Minamitsuru-gun, Yamanashi 401-05 (JP)

(72) Inventors:
• Murai, Masao, Room 10-103,
Fanuc Manshonharimomi
Minamitsuru-gun, Yamanashi, 401-05 (JP)

• Sakurai, Akihiro, Fanuc Dai3virakaramatsu
Yamanashi, 401-05 (JP)
• Kawahara, Akiyoshi,
Room 6-110 Fanuc Manshonhari-
Minamitsuru-gun, Yamanashi, 401-05 (JP)

(74) Representative: Billington, Lawrence Emlyn et al
HASELTINE LAKE & CO
Hazlitt House
28 Southampton Buildings
Chancery Lane
London WC2A 1AT (GB)

(54) **Power supply unit for an electric discharge machine**

(57) In a power supply unit for an electric discharge machine, a switching circuit comprises two switching elements (21,22) connected in series. The respective switching elements (21,22) are controlled so that these switching elements are simultaneously in an ON state for a specific period. As a result of that, an ON time which is shorter than an ON time to be obtained in a case where the switching circuit is composed of only one switching element, will be obtained. Moreover, the two switching elements (21,22) connected in series may be connected in parallel with another pair thereof (23,24), so that the number of repetitive times of an ON time per unit time becomes twice as much as a case where the switching circuit is composed of only one switching element pair (21,22).

FIG. 5

# Description

The present invention relates to a power supply unit for an electric discharge machine, which applies a voltage from a DC power source to an interelectrode gap between an electrode and a workpiece, through a switching element. There has already been known a power supply unit for an electric discharge machine, which has a switching circuit constituted by interposing one switching element between an interelectrode gap provided by a machining electrode and a workpiece, and a DC power source, and which controls a time of applying a DC voltage to the electrode by executing ON-OFF control for the switching element according to ON-command means.

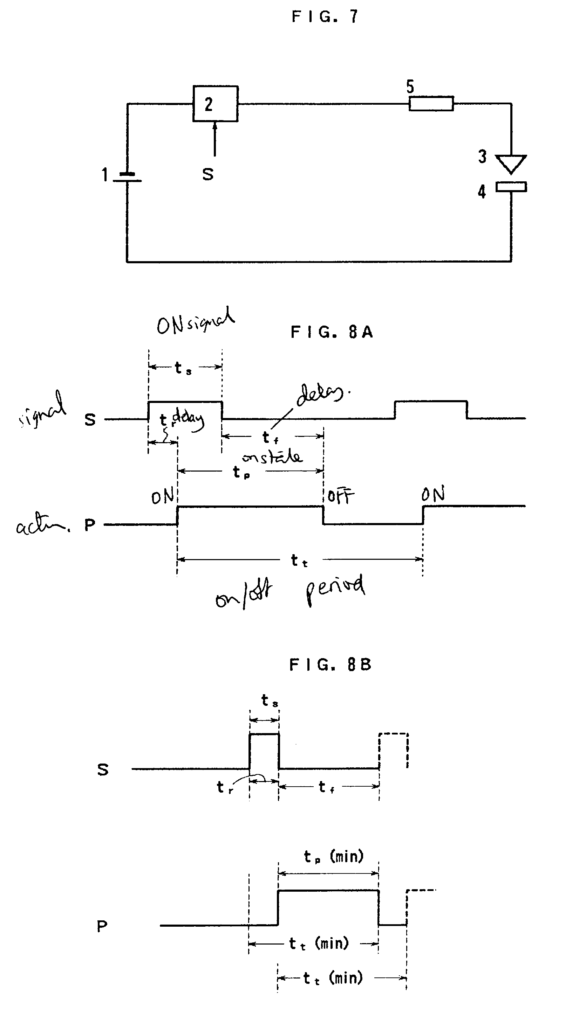

An example of the known power supply unit will be described below with reference to a block diagram shown in Fig. 7.

In Fig. 7, a reference numeral 1 denotes a DC power source, 2 denotes a switching element, 3 denotes a machining electrode, 4 denotes a workpiece and 5 denotes a current limiting resistor. Also, a symbol "S" is an ON-command signal for turning the switching element 2 on only for a predetermined time.

In the case where an electric discharge machining is executed by using the power supply unit as shown in Fig. 7, there have been known the following two systems, for example, (1) a system of turning the switching element 2 on to apply a DC current to an interelectrode gap, and turning off the switching element 2 when a predetermined time elapsed after a discharge is generated in the interelectrode gap by the DC voltage, thereby obtaining a machining current having a desired pulse width, and (2) a system of repeating an ON-OFF operation of the switching element 2 regardless of the presence of the generation of discharge, thereby obtaining a machining current having a fine pulse width.

The foregoing system (1) is suitable for obtaining a current pulse having a relatively wide pulse width used in a process from rough machining to medium machining. On the other hand, the foregoing system (2) is suitable for finish machining, and requires a current pulse having a fine pulse width to make small a surface roughness and to improve a machining precision in the finish machining in particular.

If an ON-command signal is given to the switching element shown in Fig. 7, the switching element 2 actually changes over from an OFF state to an ON state after a certain time (pulse delay time) elapsed. Also, if an off-command signal is given to the switching element 2 which is in an ON state, the switching element 2 actually changes over from an ON state to an OFF state after a certain time (pulse delay time) elapsed.

The above-mentioned phenomenon will be described below with reference to Fig. 8A.

In Fig. 8A, a symbol "S" is indicative of a state where an ON-command signal is inputted to the switching element 2 in the circuit of the power supply unit for an electric discharge machine shown in Fig. 7 when the signal is at a high level. On the other hand, a symbol "P" is indicative of a state where the switching element 2 is in an ON state where a signal P is at a high level.

Moreover, in Fig. 8A, a symbol $t_s$ represents a period of time the ON-command signal S is being outputted, and a symbol $t_p$ represents a period of time the switching element 2 is actually in an ON state according to the ON-command signal, that is, an ON-time width. Also, a symbol $t_r$ represents a time until the switching element 2 changes over from an OFF state to an ON state after the ON-command signal S rises, a symbol $t_f$ represents a period of time until the switching element 2 is changed over from an ON state to an OFF state after the ON-command signal S falls, and a symbol $t_t$ represents a repetitive period of the ON-command signals S and the signal P.

In general, a semiconductor device such as a transistor is frequently used as a switching element incorporated in a power supply circuit of an electric discharge machine. A pulse delay time $t_r$ is shorter than a pulse delay time $t_f$, that is, there is established a relation of $t_r < t_f$.

The pulse delay time $t_r$ is required until the switching element becomes an ON state after the ON-command signal S rises. Also, the pulse delay time $t_f$ is required until the switching element becomes a OFF state after the ON-command signal S falls. For this reason, it is impossible to make the time $t_s$ during which the ON-command signal S is being outputted shorter than the pulse delay time $t_r$, and it is impossible to make the ON time width $t_p$ of the switching element 2 shorter than the pulse delay time $t_f$.

Therefore, the minimum value $t_p$ (min) of the ON time width $t_p$ is the pulse delay time $t_f$, that is, expressed by the following equation (1).

$$t_p \text{ (min)} = t_f \qquad (1)$$

In order to control the switching element 2 so that the switching element 2 is in an ON state for only a period of $t_p$ (min) = $t_f$ as shown in Fig. 8B, a pulse rise time of the ON-command signal S is prior to the point of time when the switching element 2 changes over from OFF to ON state by the pulse delay time $t_r$; on the other hand, a pulse fall time of the ON-command signal S must be prior to the point of time when the switching element 2 changes over from ON to OFF by the pulse delay time $t_f$. In this case, the period of time $t_s$ of the ON-command signal S becomes equal to the pulse delay time $t_f$.

A pulse rise time of the next ON-command signal S can be set to the point of time when the switching element 2 changes over from ON to OFF at the earliest, as shown by a dotted line in Fig. 8B. In other words, the next ON-command signal S rises when only period of $t_p$ (min) = $t_f$ elapsed after the previous ON-command signal S falls. Therefore, the minimum value $t_t$ (min) of a repetitive period $t_t$ is as the following equation (2).

$$t_t \text{ (min)} = t_r + t_f \qquad (2)$$

In this case, a semiconductor such as a transistor is used as the switching element 2; for this reason, transient phenomena actually exist in the case where the switching element 2 changes over from ON to OFF and from OFF to ON. Thus, a pulse waveform does not form a rectangular shape as shown by P in Fig. 8A and Fig. 8B, and some rounding (pulse distortion) is generated dependently upon a time constant. However, in Fig. 8A and Fig. 8B, the foregoing transient phenomena are disregarded for convenience sake of a principle explanation.

In the case of reducing surface roughness or increasing machining precision in finish machining, a machining current pulse having a very short pulse width is required. In other words, the ON time width $t_p$ of the switching element 2 must be made very short. In the case of using the conventional power-supply unit for an electric discharge machine to execute the machining as described above, the foregoing system (2) of repeating an ON-OFF operation of the switching element 2 regardless of the presence of the discharge generation is frequently employed.

A pulse width of a machining current flowing by a discharge which is generated in dependence on an applied voltage period or voltage application to the interelectrode gap is dependent upon the ON time width $t_p$ of the switching element 2. However, as described above (see the equation (1)), it is impossible to make the ON time width $t_p$ of the switching element 2 shorter than the pulse delay time $t_f$. The minimum value of the ON time width $t_p$ of the switching element 2 is restricted (according to characteristics of the switching element used). As a result, the pulse width of machining current is not controlled to a desired minimum value; for this reason, there is a limitation on a surface roughness or machining precision.

In order to improve a machining speed, there is a need of making short a repetitive period $t_t$ of an ON operation of the switching element 2, and increasing the number of pulses of a machining current per unit time. However, as described above (see the equation (2)), it is impossible to control the repetitive period $t_t$ of an ON operation of the switching element 2 below the sum of the pulse delay time $t_r$ and $t_f$ or less. Therefore, the repetitive period $t_t$ of an ON operation of the switching element 2 has a limitation (in dependence on the characteristics of switching element used); for this reason, there is a limitation on an increase in the number of pulses of a machining current per unit time. This hinders improving a machining speed.

As described above, the conventional power supply unit for an electric discharge machine has a limitation which is dependent on the characteristics of a switching element (pulse delay time until the switching element actually becomes an ON state after the ON-command signal is outputted, and pulse delay time until the switching element actually becomes an OFF state after the OFF-command signal is outputted). For this reason, there is a problem in that there is a limitation on a surface smoothness, machining precision and speed.

To solve the above problem in the prior art, an object of the present invention is to provide a power supply unit for an electric discharge machine, which can perform a machining operation with a high machining precision and at a high speed.

In the present invention, at least two switching elements are interposed in series between a DC power source and an interelectrode gap, in place of interposing only one switching element therebetween, and these switching elements are controlled in a manner such that individual switching elements are simultaneously in an ON state for a partial period. As a result, there can be provided a short-width ON time, which could not usually be obtained in the case where one switching element as employed in the prior art is used.

Moreover, in a development of the present invention, at least two switching elements connected in series are used as one pair, and at least two pairs are connected in parallel between the power source and the gap interelectrode gap, thereby realizing a short ON time width and making the repetitive number of the ON time per unit time twice as many or more.

Some embodiments of the present invention will be described below by way of example and with reference to the accompanying drawings, in which:

Fig. 1 is a block diagram showing an example of a power supply unit according to first and second embodiments of the present invention;
Fig. 2 is a block diagram showing another example of the power supply unit according to first and second embodiments of the present invention;
Fig. 3 is a time chart for explaining an example of an ON-OFF operation of a switching element in the power supply unit shown in Figs. 1 and 2 according to the first embodiment of the present invention;
Fig. 4 is a time chart explaining an another example of an ON-OFF operation of a switching element in the power supply unit shown in Figs. 1 and 2 according to the second embodiment of the present invention;
Fig. 5 is a block diagram showing an example of a power supply unit according to a third embodiment of the present invention;
Fig. 6 is a time chart explaining an example of an ON/OFF operation of a switching element in the power supply unit shown in Fig. 5 according to the third embodiment of the present invention;
Fig. 7 is a block diagram schematically showing a conventional power supply unit for an electric discharge machine; and
Fig. 8A and Fig. 8B are time charts explaining the relationship between an ON-command signal and an ON-OFF state of a switching element in the conventional power supply unit for an electric discharge machine.

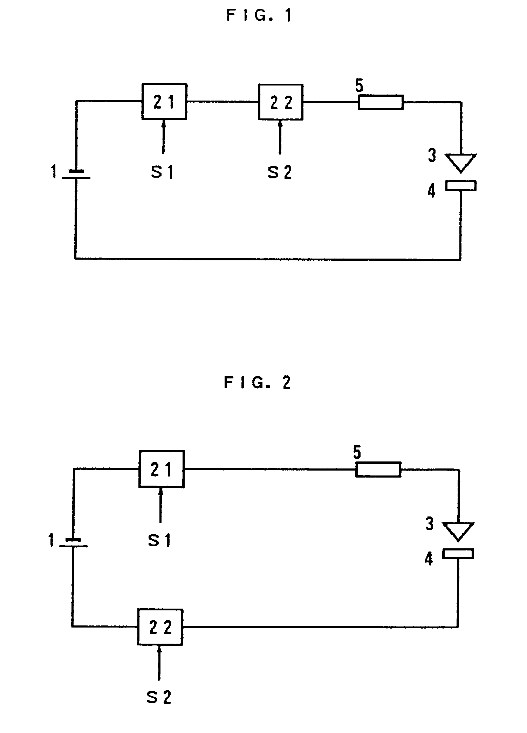

The first and second embodiments of the present invention will be described below with reference to Figs. 1 and 2, and Figs. 3 and 4.

Examples of power supply units for the electric discharge machine to be used in the first and second embodiments will be described below with reference to Figs. 1 and 2.

In Figs. 1 and 2, a reference number 1 denotes a DC power source, 21 and 22 individually denote a switching element made of a semiconductor such as a transistor, 3 denotes a machining electrode, 4 denotes a workpiece, and 5 denotes a current-limit resistance. Also, S1 and S2 are on-command signals for turning switching elements 21 and 22 on only for a predetermined time. A discharge is generated in an interelectrode gap between the machining electrode 3 and the workpiece 4.

A power supply unit shown in Fig. 1 has a constitution in which switching elements 21 and 22 are connected in series adjacent to each other in a closed circuit constituted by the interelectrode gap and the DC power source 1. A machining current pulse flowing through the inter electrode gap is controlled by executing an ON-OFF control of the respective switching elements 21 and 22.

On the other hand, a power supply unit shown in Fig. 2 has a constitution in which switching elements 21 and 22 are connected in series in a closed circuit constituted by the interelectrode gap and the DC power source 1, in a manner such that the power source is inserted between the switching elements 21 and 22. A machining current pulse flowing through the interelectrode gap is controlled by means of the control of switching elements 21 and 22, like the circuit shown in Fig. 1.

As already described with reference to Fig. 8A, the respective switching elements 21 and 22 change over from an OFF to ON state when a specified time elapsed after the ON-command signal is inputted, and change over from an ON to OFF state when a specified time elapsed after the ON-command signal falls.

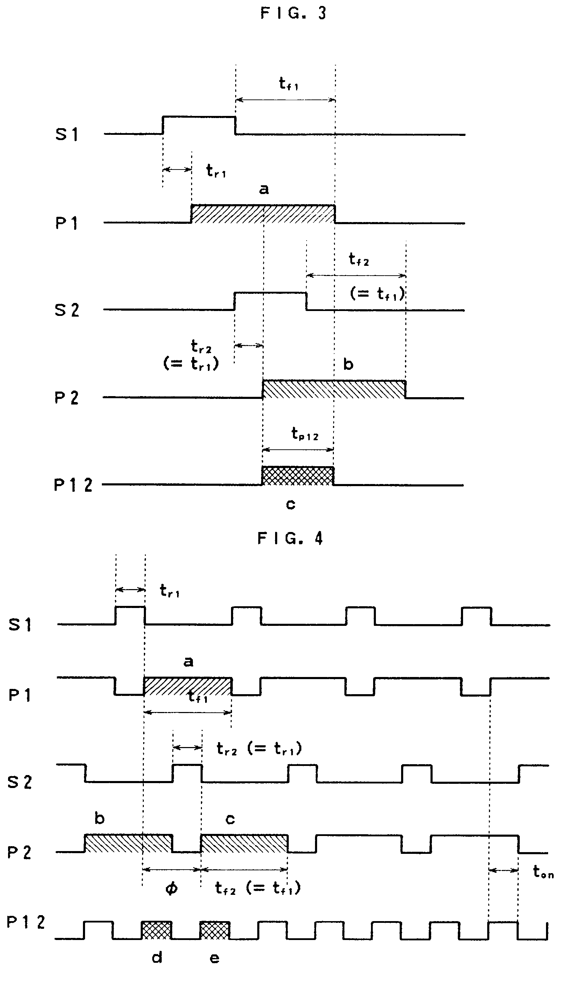

Next, an operation of the power supply units shown in Figs. 1 and 2 will be described below with reference to a time chart of Fig. 3.

In Fig. 3, S1 and S2 individually show a state where an ON-command signal is inputted to the respective switching elements 21 and 22 when the signal is at a high level. P1 and P2 are individually indicative that the respective switching elements 21 and 22 are in an ON state when the signal is at a high level. P12 is indicative that a machining current pulse is applied to the interelectrodegap when the signal is at a high level.

The ON-command signals S1 and S2 are each inputted to switching elements 21 and 22 of the power supply unit shown in Fig. 1 or Fig. 2, with a phase difference. Whereupon the switching element 21 changes over from an OFF to ON state when a pulse delay time $t_{r1}$ elapsed after the ON-command signal S1 is inputted to the switching element 21, and changes over from an ON to OFF state when a pulse delay time $t_{f1}$ elapsed after the ON-command signal S1 falls. As a result, the switching element 21 is in an ON state for a period shown by "a" in P1 of Fig. 3.

On the other hand, the switching element 22 changes over from an OFF to ON state when a pulse delay time $t_{r2}$ elapsed after the ON-command signal S2 is inputted to the switching element 22, and changes over from an ON to OFF state when a pulse delay time $t_{f2}$ elapsed after the ON-command signal S2 falls. As a result, the switching element 22 is in an ON state for a period shown by "b" in P2 of Fig. 3.

In an example shown in Fig. 3, these switching elements 21 and 22 individually have the same characteristics, so that rise delay time $t_r$ of both switching elements 21 and 22 become equal ($t_r = t_{r1} = t_{r2}$), and fall delay time $t_r$ thereof become equal ($t_r = t_{f1} = t_{f2}$).

In the power supply units shown in Figs. 1 and 2, a voltage from the DC power source 1 is applied to the interelectrode only when both switching elements 21 and 22 become an ON state together, and a machining current pulse flows when a discharge is generated in the interelectrode gap. In Fig. 3, the above state is equivalent to a period "c" on a high level in P12. The period "c" is an overlap portion of the period "a" where the switching element 21 is in an ON state and the period "b" where the switching element 22 is in an ON state.

In order to control the switching elements 21 and 22 so that these elements 21 and 22 are individually in an ON state for periods "a" and "b", this can be achieved by controlling the command signals S1 and S2. Therefore, a machining current pulse width $t_{P12}$ which is an overlap period (shown by "c" in the time chart) of the periods "a" and "b" can be obtained by controlling the command signals S1 and S2.

If the ON-command signals S1 and S2 are controlled so that the ON state of the switching element 21 overlaps with the ON state of the switching element 22, there can be provided an ON time width shorter than the minimum ON time width (the minimum ON time width $t_p$ (min) already described in Fig. 8B) obtained from a single switching element. As described above, by using the power supply units shown in Figs. 1 and 2, a machining current pulse having a very short pulse width can be obtained.

Subsequently, another example of the operation of the power supply units shown in Figs. 1 and 2 will be described below with reference to a time chart of Fig. 4.

In Fig. 4, S1 and S2 individually shows a state where an ON-command signal is inputted to each of the switching elements 21 and 22 when the signal is at a high level. P1 and P2 are individually indicative that each of the switching elements 21 and 22 is in an ON state when a signal is at a high level. P12 is indicative that a machining current pulse is applied to the interelectrode when a signal is at a high level.

The ON-command signal S1 shown in Fig. 4 is given to the switching element 21 of the power-supply unit shown in Fig. 1 or Fig. 2. Moreover, the ON-command signal S2 shown in Fig. 4, which has the same repetitive period as the signal S1 but has the phase difference of $\phi$ with respect to the signal S1, is given to the switching element 22. Whereupon the switching element 21 changes over from an OFF to ON state when the pulse delay time $t_{r1}$ elapsed after the ON-command signal S1 is inputted, and changes over from an ON to OFF state when the pulse delay time $t_{f1}$ elapsed after the ON-command signal S1 falls. As a result, the switching element 21 is in an ON state for a period shown by "a" in P1 of Fig. 4. In this case, the switching element 21 is operated in the shortest ON time and in the shortest repetitive period ($t_p$ (min) and $t_t$ (min) already described in Fig. 8A).

On the other hand, the switching element 22 changes over from an OFF to ON state when the pulse delay time $t_{r2}$ elapsed after the ON-command signal S2 is inputted, and changes over from an ON to OFF state when the pulse delay time $t_{f2}$ elapsed after the on-command signal S2 falls. As a result, the switching element 21 is in an ON state for a period shown by "b" in P2 of Fig. 4. In this case, the switching element 22 is operated in the shortest ON time and in the shortest repetitive period, as in the case of the switching element 21. In an example shown in Fig. 4, these switching elements 21 and 22 individually have the same characteristics, so that rise delay time $t_r$ of both switching elements 21 and 22 become equal ($t_r = t_{r1} = t_{r2}$), and fall delay time $t_r$ thereof become equal ($t_r = t_{f1} = t_{f2}$), as in the case of the example shown in Fig. 3.

If the ON-command signals S1 and S2 are controlled so that a phase difference $\phi = \pi$ occurs between the signals, a phase difference $\phi = \pi$ occurs between operations of the switching elements 21 and 22. At this moment, in the time chart of Fig. 4, a period where the switching elements 21 and 22 are simultaneously in an ON state is a period overlapping the period shown by "a" shown in P1 with the period shown by "b" and "c" in P2. That is, the period is shown by "d" and "e" in P12. Thus, a switching circuit which comprises the switching elements 21 and 22 connected in series repeats an ON-OFF operation in a short ON-state section and a short repetitive period as shown in P12.

An ON-state period shown by each of "d" and "e" in P12 of Fig. 4 is shorter than an ON-state period obtained by the ON-command signal S1 alone or S2 alone; therefore, the number of repetitive times of an ON time per unit time is twice the maximum number of repetitive times of an ON time obtained from the case where a switching element is singly used. Moreover, an ON time width $t_{on}$ is obtained from an equation $t_{on} = (t_f - t_r)/2$, and can be shortened as compared with the minimum ON time $t_f$ obtained in the case where a single switching element is only used.

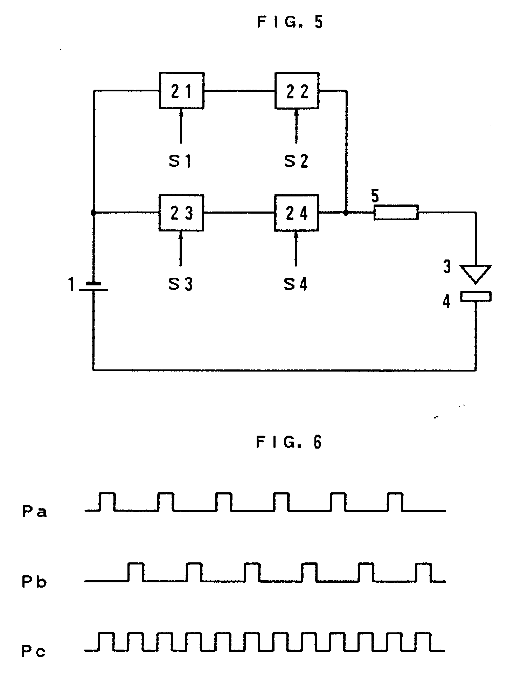

An example of a power supply unit for an electric discharge machine to be used in the third embodiment of the present invention will be described below with reference to a block diagram shown in Fig. 5.

In Fig. 5, a reference numeral 1 denotes a DC power source, 3 denotes a machining electrode, 4 denotes a workpiece, and 5 denotes a current limiting resistor. A pair of switching elements 21 and 22 connected in series and a pair of switching elements 23 and 24 connected in series are interposed in parallel between the DC power source 1 and the current limiting resistor 5. Each of S1, S2, S3 and S4 is an ON-command signal for turning the respective switching elements 21, 22, 23 and 24 on only for a predetermined time. In the embodiment shown in Fig. 5, a discharge is generated in an interelectrode gap, constituted by the machining electrode 3 and the workpiece 4, as in the case of the foregoing embodiments.

An operation of the power supply unit shown in Fig. 5 will be described below with reference to a time chart of Fig. 6.

In Fig. 6, Pa is a signal indicative that the pair of switching elements 21 and 22 connected in series simultaneously turn on when the signal is at a high level. Pb is a signal indicative that the pair of switching elements 23 and 24 connected in series simultaneously turn on when the signal is at a high level. These signals Pa and Pb are individually produced by using the same method as that for producing the signal P12 of Fig. 3 or the signal P12 of Fig. 4. The pair of switching elements 21 and 22 connected in series and the pair of switching elements 23 and 24 connected in series are connected in parallel, so that a signal Pc as a logical sum of the signals Pa and Pb is inputted to the interelectrode gap.

In an example shown in Fig. 6, a phase of the respective signals Pa and Pb is shifted from each other by $\phi$, so that the signal Pc, which has the same ON-state time width as the respective width of signals Pa and Pb and has a repetitive period half as much as the respective width of signals Pa and Pb, is obtained.

In the power supply unit shown in Fig. 5, two pairs of switching elements connected in series are connected in parallel. Instead, three or more pairs of switching elements connected in series may be connected in parallel, and a phase of the respective signals Pa, Pb, ... produced by each switching circuit may be shifted from one another so as not to overlap with one another, thereby increasing the number of repetitive time of an ON time per unit time.

## Claims

1. A power supply unit for an electric discharge machine comprising:

   a switching circuit having a configuration in which two or more switching elements are interposed in series between a DC power source and an interelectrode gap between an electrode and a workpiece; and
   ON-command means for controlling the ON/OFF state of said respective switching elements of said switching circuit,

the ON/OFF states of the respective switching elements being controlled by means of said ON-command means so that said switching elements are simultaneously in an ON state for a specific time.

2. The power supply unit according to claim 1, wherein said respective switching elements are controlled by means of said ON-command means so that they repeat an ON-OFF operation in the same repetitive period and with a predetermined phase difference.

3. The power supply unit according to claim 2, wherein a length of a period when said respective switching elements are simultaneously in an ON state is determined by adjusting said phase difference.

4. The power supply unit according to claim 1, wherein said switching circuit is formed by connecting a plurality of switching paths in parallel, each of said switching paths including two or more switching elements connected in series.

5. The power supply unit according to claim 4, wherein respective switching elements included in each of said switching paths are controlled by said ON-command means so that said switching elements repeat an ON-OFF operation in a common repetitive period and with a predetermined phase difference.

FIG. 1

FIG. 2

FIG. 3

FIG. 4

F I G. 5

F I G. 6

FIG. 7

*ON signal*

FIG. 8A

FIG. 8B

**European Patent Office**

## EUROPEAN SEARCH REPORT

Application Number

EP 95 30 7357

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | PATENT ABSTRACTS OF JAPAN vol. 011 no. 001 (M-550) ,6 January 1987 & JP-A-61 182721 (AMADA CO LTD) 15 August 1986, * abstract * * figures * | 1-5 | B23H1/02 |
| | | | TECHNICAL FIELDS SEARCHED (Int.Cl.6) |
| | | | B23H |

The present search report has been drawn up for all claims

| Place of search | Date of completion of the search | Examiner |
|---|---|---|
| THE HAGUE | 23 January 1996 | Haegeman, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)